# EUROPEAN PATENT APPLICATION

(11) **EP 4 518 053 A1**
(43) Date of publication of application: **05.03.2025**
(21) Application number: 23194943.9
(22) Date of filing: 01.09.2023
(51) Int. Cl.: H02B 1/21, H02B 1/052

(54) **MOUNTING RAIL**

(71) Applicant: Wöhner Besitz GmbH, 96472 Rödental (DE)
(72) Inventor: MASEL, Joram, 96328 Küps (DE); SCHWARZ, Jonas, 96450 Coburg (DE)
(74) Representative: 2s-ip Schramm Schneider Bertagnoll Patent- und Rechtsanwälte Part mbB

(57) **Abstract**

Mounting rail adapted for being attached to a guide rail system, the guide rail system comprising two parallel guide rail profiles running in a longitudinal direction of the guide rail system and being spaced apart from each other by a predetermined first distance, the mounting rail comprising: two parallel wings running in the longitudinal direction of the guide rail system when the mounting rail is attached to the guide rail system, each wing comprising a first longitudinal, L-profile leg, the first longitudinal leg being adapted to engage slidably in the longitudinal direction in a respective longitudinal recess provided on respective a first lateral surface of the respective guide rail profile, and at least one of the wings comprising a second longitudinal leg, with a second surface structure, the second surface structure being formed such that it blocks, when in engagement with a first surface structure provided on a second lateral surface of the respective guide rail profile, the mounting rail from sliding in at least one predetermined direction, the at least one predetermined direction being parallel or antiparallel to the longitudinal direction; the at least one of the wings comprising spring means for keeping the second surface structure in engagement with the first surface structure, when the mounting rail is attached to the busbar adapter part.

## Description

The present invention relates to a mounting rail for a busbar adapter part, and a busbar adapter part.

Such a mounting rail is used in electrical installations for attaching electrical installation devices to a busbar adapter which in turn is attached to one or more busbars of a current busbar system.

A typical busbar adapter comprises on its front part two parallel guide rail profiles being spaced apart from each other at a predetermined distance and running in longitudinal direction of the busbar adapter. The longitudinal direction of the busbar adapter and of its guide rails is perpendicular to the one or more busbars when the busbar adapter is attached onto them. The busbars typically run in the horizontal direction, and thus, the guide rails of the busbar adapter run in the vertical direction.

The guide rail profiles are provided with openings on their respective front surfaces, and preferably on at least one of their longitudinal sides. The openings are regularly-spaced apart from each other, by e.g., 1,25mm.

Correspondingly, the mounting rail is provided with notches which fit with the openings of the guide profiles and with which the mounting rail is attached to the guide rail profiles. The mounting rail may be secured with screws on the longitudinal sides of the guide rails. In this way it is possible to adjust the mounting rail gradually at a desired position in the longitudinal direction of the busbar adapter.

Sometimes, securing the mounting rail to the busbar adapter by use of screws is uncomfortable since tools like a screwdriver may have to be at hand. Moreover, once attached, changing the position of a mounting rail on the busbar adapter, or removing it require the use of the tool again. Moreover, the screws may get lost during the handling of the busbar adapters.

Therefore, it is an object of the present invention to provide a mounting rail for attaching to a busbar adapter, as well as a busbar adapter part which alleviate at least partially the drawbacks as mentioned above.

According to the invention, this object is achieved by the mounting rail and busbar adapter part with the features specified in the respective independent claims.

Further refinements of the arrangement according to the invention result from the dependent claims.

Herein, the electrical installation device may be in particular one of the following: Engine control unit, motor starter, reversing starter, contactor, molded case circuit breaker, miniature circuit breaker, power supply unit, adapter for electrical devices, measuring device, display device, converter unit, fuse holder, switch disconnector, switch disconnector with fuses, fuse switch disconnector, overvoltage protection device, lightning protection device, communication device, residual current circuit breaker, interference suppression device, controller.

It is a general advantage of the invention that of the mounting rail can be securely attached to the busbar adapter without the use of a tool, just by manual operation. Moreover, once attached the mounting rail can be shifted along the busbar adapter or separated from the busbar adapter also without any tool.

On the other hand, the busbar adapter of the invention is downwards compatible with existing mounting rails.

The invention and embodiments thereof will be described in more detail in connection with the figures, in which
- Fig. 1: illustrates the mounting rail attached to the busbar adapter part according to an embodiment of the invention;
- Fig. 2: illustrates the mounting rail alone in greater detail;
- Fig. 3: illustrates the busbar adapter part alone in greater detail; and
- Fig. 4: illustrates variants of shapes of the first and second surface structures;
- Fig. 5: illustrates a further embodiment of the invention.

Further, if not explicitly specified, it is assumed that the current busbars of a busbar system (not illustrated in the figures) run in the horizontal direction, denoted as y-direction, and the busbar adapter when attached to the busbars, runs in the vertical direction, denoted as x-direction, such that it extends across, or runs over all the busbars of the busbar system. Then, the longitudinal direction x of the busbar adapter 100 and its guide rail profiles 110 is the vertical direction. The positive longitudinal direction x may point upward. The direction perpendicular to the x-direction is the y-direction. However, there are embodiments of the invention where the busbars may not run in the horizontal direction, and thus, the longitudinal direction may not be the vertical direction.

The front side of the busbar adapter, or of the mounting rail 1 and parts thereof is the respective view onto them when correctly mounted. An outer side of a part is a side or surface which is oriented away from a center line of the corresponding part. An inner side or surface of a is a side which is oriented towards a center line of the part.

The front or frontside of the mounting portion, busbar adapter, of the installation device, of the busbars, the busbar system or of any part thereof is the side which is oriented to a human standing in front of the busbar adapter, the busbar system or the part if they are mounted as intended.

The rear side is a side of a part which is oriented or faced to the background or away from a human standing in front of that part or portion.

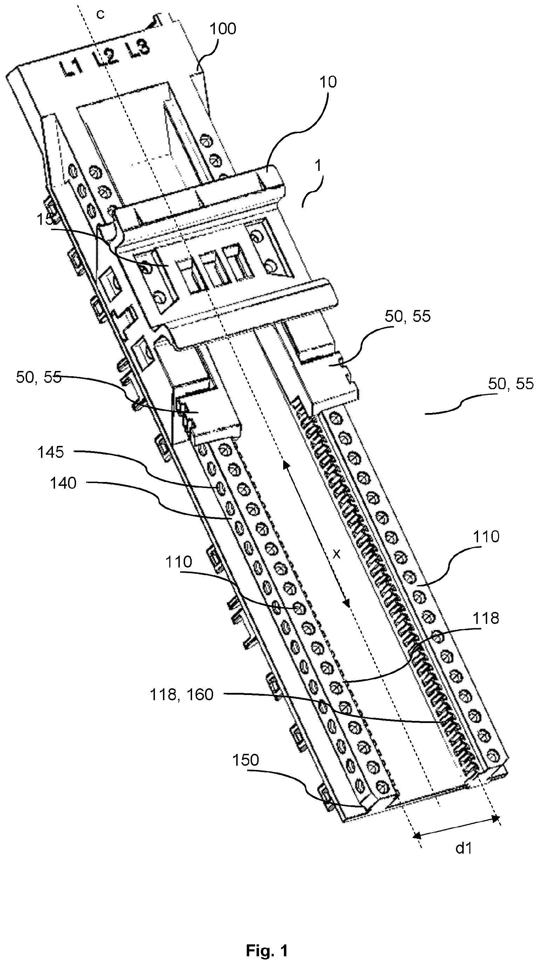

Fig. 1 illustrates the mounting rail 1 attached to the two parallel guide rail profiles 110 of a busbar adapter part 100 according to an embodiment of the invention.

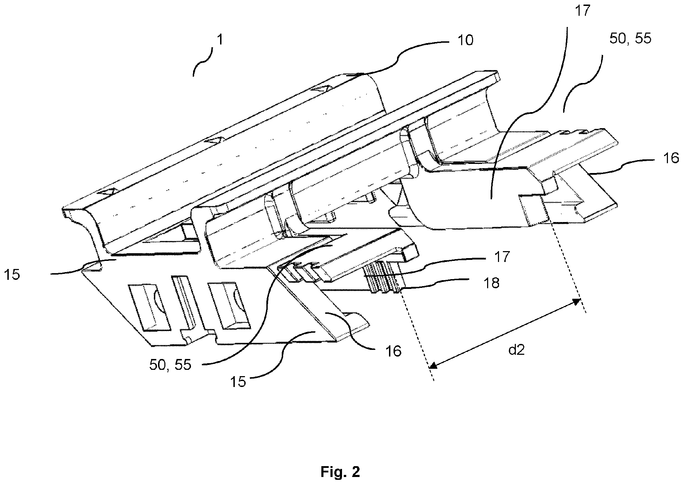

Fig. 2 illustrates the mounting rail 1 alone. The mounting rail 1 comprises a DIN rail 10 as receiving means 10 for an electrical installation device (not illustrated).

The busbar adapter part 100 is the front side, or front surface, of a busbar adapter. The two guide rail profiles 110 are parallel to each other and are arranged in a predetermined guide rail profile distance d1 to each other on the busbar adapter part 100. They run along the longitudinal direction x of the busbar adapter part 100, that is, in the vertical direction.

A centerline c may be defined which runs along direction x in the middle between both guide rail profiles 110.

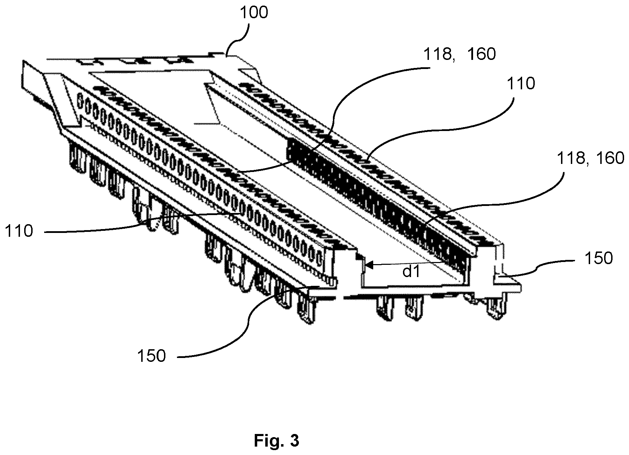

As illustrated in greater detail in Fig. 3, each guide rail profile 110 has a longitudinal recess 150 on a first lateral surface, that is on its outer side 140.

Furthermore, each guide rail profile 110 is provided, on a second lateral surface, that is an inner side 160, with a first surface structure 118. The first surface structure 118 comprises grooves extending perpendicularly with respect to the recess 150 and being regularly-spaced apart from each other. The grooves are adapted to engage with corresponding ribs of the second surface structure 18 of the mounting rail 1 as will be described below.

The guide rail profile 110 may have optionally holes 145 in the first lateral surface, that is on its outer side 140, and/or in the front surface. Such holes provide downward compatibility with existing mounting rails. Such holes may be used to fix heavy devices additionally with screws.

The mounting rail 1 comprises two parallel wings 15, running in the longitudinal direction x of the busbar adapter part 100 when the mounting rail 1 is attached to the busbar adapter part 100. Each wing 15 comprises a first longitudinal, L-profile leg 16. The first longitudinal leg 16 is adapted to engage with the recess 150 of the corresponding guide rail profile 110 slidably in the longitudinal direction x. That is, the mounting rail 1 grasps with its longitudinal L-profile legs 16 behind the recesses 150 of the guide rail profiles 110. So, when placed on the guide rail profiles 110, without other measures be provided, the mounting rail 1 may slide on them vertically downwards but would not fall away from it. On the other hand, the recesses 150 are used for pre-positioning mounting rails of the prior art prior to being fixed by screws.

For locking the mounting rail 1 in the vertical direction x, each wing 15 comprises a second longitudinal leg 17 with a second surface structure 18 on it. The second surface structures 18 are formed such that they block, when in engagement with the first surface structures 118 of the guide rail profiles 110, the mounting rail 1 from sliding down in the longitudinal direction x.

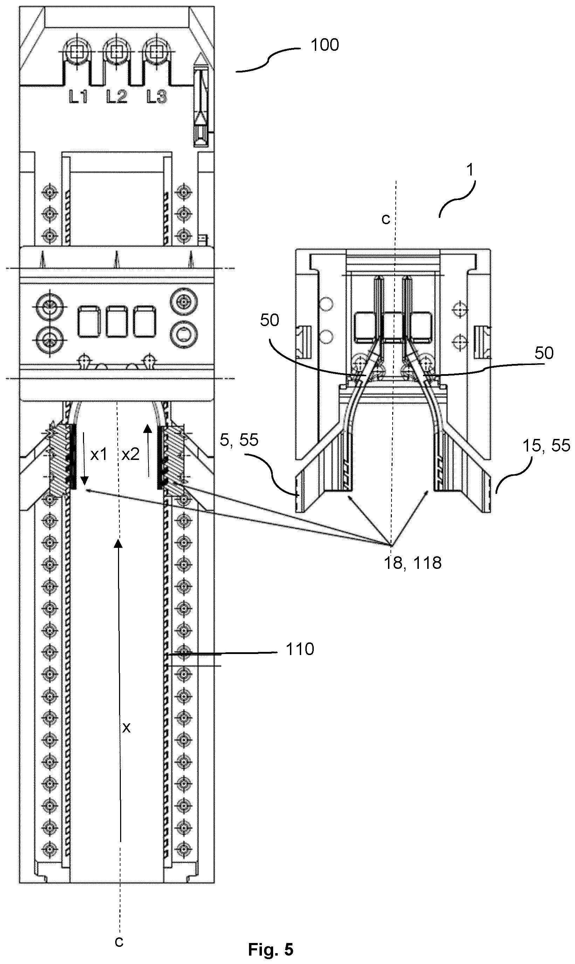

For keeping the second surface structures 18 in engagement with the first surface structures 118, the mounting rail 1 comprises spring means 50. The spring means 50 keep the second surfaces 18 in engagement with the first surface structures when the spring means 50 are in their relaxed condition. The spring means 50 are integral parts of the second longitudinal legs 17. That is, the legs 17 are shaped such they fit with the guide rail profiles 110 when the mounting rail 1 is mounted with its first longitudinal legs 16 on the guide rail profiles 110. Refer also to Fig. 5 (right) for the position of the spring means 50. The mounting rail 1 can be released for sliding along the guide rail system by pushing the wings 15 against the restoring force of the spring means 50 towards each other, that is away from the relaxed condition.

This is done by applying a force against the restoring force of the spring means 50. Hereto, the legs 17 are provided at their front ends with tabs 55 which can be pressed together by hand. When pressed together, the distance d2 becomes smaller than the distance d1 so that the second surface structures 18 lose contact to the first surface structures 118, and are released from the first surface structures 118. Then, the mounting rail 1 can be slid up or down along the guide rail profiles 110 into the intended longitudinal position on the guide rail profiles 110.

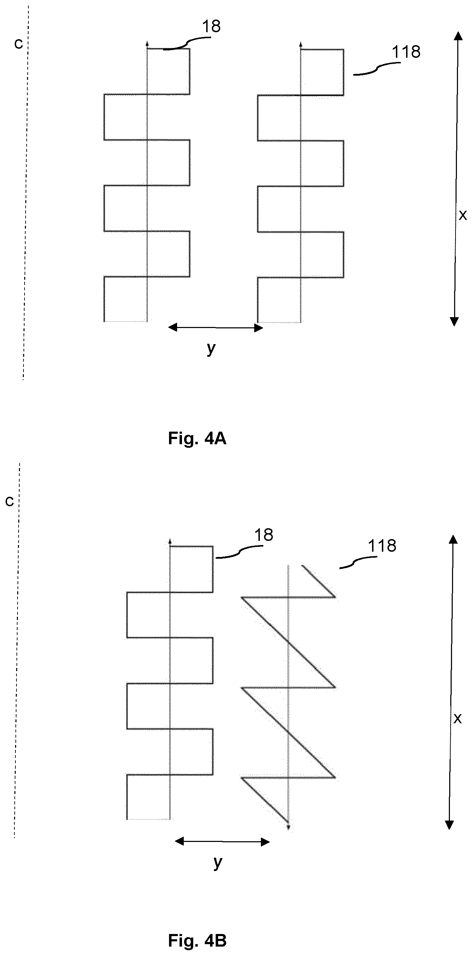

The first and second surface structures 118, 18 may have various shapes. Fig. 4 A-C illustrate variants of shapes of the first and second surface structures 118, 18. Shown are the shapes of the guide rail profile 110 and wing 15 and on the right side of the centerline x. The respective shapes of the left guide rail profile 110 and wing 15 are mirrored with respect to the centerline x. The shapes are complementary to each other in the sense that they engage at least partially each other when the first structures 118 and the second structures 18 are brought in contact with each other.

In the first variant, the first surface structures 118 comprise grooves which are in the horizontal direction y (when the busbar adapter is attached to the busbars), and regularly-spaced apart from each other. The grooves are over a part of the length of the guide rail profile 110, refer to Fig. 4A.

Conversely, the second surface structures 18 comprise ribs which can engage with the grooves. The ribs extend are also horizontally (when the mounting rail 1 is attached to the guide rail profiles 110), i.e., in the y-direction, and are regularly spaced-apart from each other. The ribs are over a part of the length of the second longitudinal leg 17.

In a further variant of the invention, the grooves form a saw tooth profile along the vertical direction x, with the rising edge, or ramp, of each tooth pointing upwards in the vertical direction x, and a sharply falling edge, or return edge, in the horizontal y-direction, refer to Fig. 4B. Then, each rib of the second surface structure 18 sits on the return edge i.e., the horizontal part of a tooth, oriented in the y-direction. If the second surface structure 118 is shaped in this way, the mounting rail 1 is secured against sliding down by the horizontal parts of the ribs. Moving upwards of the mounting rail 1 is prevented by its own weight.

The mounting rail 1 can be moved downwards by disengaging the second surface structure 18 from the first surface structure 118, as described above.

On the other hand, the mounting rail 1 can be slid up over the ramps of the saw tooth profile upwards without pressing the tabs 55 together.

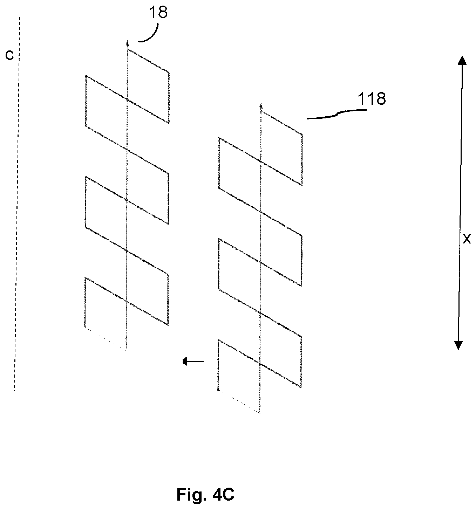

Fig. 4C illustrates yet a further variant of the first and second surface structures 118, 18. Similar to Fig. 4A the surface structures are grooves and corresponding ribs. However, the grooves and ribs are at an angle to a horizontal line, that is to a line y perpendicular to the longitudinal direction x. That is, the ribs of the second surface structure 18 on the wing 15 point downwards. The complementary grooves of the first surface structure 118 point also downwards. Thus, the tibs and grooves run into a direction which has a parallel component to the blocking force which presses the wings 15 against the respective guide rail profiles 110. Thus, the first and second surface structures 118, 18 form a self-reinforcing design. That is, blocking of the mounting rail 1 on the guide rail profiles 110 is reinforced when the mounting rail 1 either by its own weight or by external force is pushed downwards. Pushing downwards results in an outward force applied onto the respective wing 15 against the respective second lateral surface 160 with its first surface structure 118.

In yet a further embodiment of the invention, the positions of the shapes of the first and of the second surface structures 18, 118 are interchanged. That is, the grooves are arranged, as the second surface structures 18, on the second legs 17 of the wings 15, while the ribs are arranged, as the first surface structures, on the guide rail profiles 110.

In all the variants described above, the grooves are regularly-spaced apart from each other, and all of them are supposed to have exactly the same shape. However, in a further embodiment of the invention, grooves at particular positions on the leg may have a different form. Then, when the mounting rail is moved with its first ribs into, or over such grooves, the user gets a particular, or "irregular click impression", different from the "regular click impressions" perceived when moving over all the other grooves. In that way, particular height positions for the mounting rail 1 can be "coded" on the on the guide rail profiles 110 of the busbar adapter part 100. This facilitates the definition of preferred positions of the mounting rail on the busbar adapter.

Fig. 5 illustrates a further embodiment of the invention. The figure on the right side is a view from the backside onto the mounting rail. In this embodiment of the invention, the mounting rail 1 is not completely symmetrical with respect to a center line running in the longitudinal direction x of the busbar adapter part 100. That is, the first surface structures 118 of the one and of the other guide rail profile 110 and correspondingly the second surface structures 18 of the one and of the wing 15 are not identical to each other.

Thus, the second surface structure 18 of the second longitudinal leg 17 of the one of the wings 15 (i,e., the left one) is formed such that it blocks, when in engagement with the respective first surface structure 118 of the guide rail profile 110 the mounting rail 1 from sliding in a predetermined direction x1, which is antiparallel to the longitudinal direction x (pointing up). The second surface structure 18 of the second longitudinal leg 17 of the other one of the wings 15 (i.e., the right one) is formed such that it blocks, when in engagement with the respective first surface structure 118 of the guide rail profile 110 the mounting rail 1 from sliding in a predetermined direction x2, which is parallel to the longitudinal direction x.

In other words, one wing 15 is adapted to block the mounting rail 1 from sliding in just the one longitudinal direction, whereas the other wing 15 is adapted to block the mounting rail 1 from sliding in the opposite longitudinal direction. That is, the mounting rail 1 is completely blocked against sliding along the guide rail profiles 110.

This can best be achieved with the structures 18, 118 as described in connection with Fig. 4C for the one wing 15 and the respective guide profile 110, whereas the structures 18, 118 of the other wing 15 and of the respective guide rail profile 110 are flipped upside down.

However, the surface structures 18, 118 of Fig. 4B may also be used.

This embodiment is not limited to the case where the busbars 20 run in the horizontal direction. Rather, the busbars 20 may run in an arbitrary direction. As an example, they run in the vertical direction. Moreover, the busbars 20 may be located at, or define, a plane which is not a vertical wall. As an example, the busbars 20 are located on a horizontal plane.

### Reference Numerals

- 1: Mounting rail
- 10: receiving means, DIN rail
- 15: wing
- 16: first longitudinal, L-profile leg
- 17: second longitudinal leg
- 18: second surface structure
- 50: spring means
- 55: tab
- 100: busbar adapter part
- 110: guide rail profile
- 118: first surface structure
- 140: first lateral surface, outer side
- 145: hole
- 150: longitudinal recess
- 160: second lateral surface, inner side
- d1: distance between guide rail profiles, first distance
- d2: distance between second longitudinal edges, second distance
- c: centerline
- x: longitudinal direction, vertical direction
- x1, x2: predetermined direction
- y: direction perpendicular to the longitudinal direction, horizontal direction

## Claims

1. Mounting rail (1) adapted for being attached to a guide rail system,
the guide rail system (100) comprising two parallel guide rail profiles (110) running in a longitudinal direction (x) of the guide rail system (100) and being spaced apart from each other by a predetermined first distance (d1),
the mounting rail (1) comprising:
two parallel wings (15) running in the longitudinal direction (x) of the guide rail system (100) when the mounting rail (1) is attached to the guide rail system (100),
and
at least one of the wings (15) comprising a second longitudinal leg (17), with a second surface structure (18),
the second surface structure (18) being formed such that it blocks, when in engagement with a first surface structure (118) provided on a second lateral surface (160) of the respective guide rail profile (110), the mounting rail (1) from sliding in at least one predetermined direction (×1),
the at least one predetermined direction (x1, x2) being parallel or antiparallel to the longitudinal direction (x);
the at least one of the wings (15) comprising spring means (50) for keeping the second surface structure (18) in engagement with the first surface structure (118), when the mounting rail (1) is attached to the busbar adapter part (100).

2. The mounting rail according to claim 1, wherein each wing (15) comprises a first longitudinal, L-profile leg (16), the first longitudinal leg (16) being adapted to engage slidably in the longitudinal direction (x) in a respective longitudinal recess (150) provided on respective a first lateral surface (140) of the respective guide rail profile (110).

3. The mounting rail according to one of the preceding claims, wherein each of the wings (15) comprises a respective second longitudinal leg (17), each second leg (17) having a respective second surface structure (18),
the respective second surface structure (18) being formed such that it blocks, when in engagement with the respective first surface structure (118) provided on the respective second lateral surface (160) of the respective guide rail profile (110) the mounting rail (1) from sliding in at least one predetermined direction (x1, x2),
the at least one predetermined direction (x1, x2) being parallel or antiparallel to the longitudinal direction (x);
each of the wings (15) having spring means (50) for keeping the respective second surface structure (18) in engagement with the respective first surface structure (118), when the mounting rail (1) is attached to the busbar adapter part (100).

4. The mounting rail according to one of the preceding claims, wherein the spring means (50) are adapted to keep the second surface structure (18) in engagement with the first surface structure (118) when the spring means (50) are in a relaxed condition.

5. The mounting rail according to one of the preceding claims, wherein the mounting rail (1) can be released for sliding along the guide rail system by pushing the wings (15) away from the relaxed condition of the spring means (50).

6. The mounting rail according to one of the preceding claims, wherein the spring means (50) are integral part of the second longitudinal leg (17).

7. The mounting rail according to one of the preceding claims, wherein the second surface structure (18) comprises ribs extending perpendicularly with respect to the second leg (17) and being regularly-spaced from each other, the ribs being further adapted to engage with corresponding grooves of the first surface structure (118).

8. The mounting rail according to one of the preceding claims, wherein the second surface structure (18) comprises grooves extending perpendicularly with respect to the second leg (17) and being regularly-spaced apart from each other, the grooves being further adapted to engage with corresponding ribs of the first structure (118).

9. The mounting rail according to one of claims 3 to 8, wherein
the longitudinal direction (x) points upward in the vertical direction and the at least one predetermined direction (x1, x2) points downwards.

10. The mounting rail according to one of claims 3 to 8, wherein
the second surface structure (18) of the second longitudinal leg (17) of the one of the wings (15) is formed such that it blocks, when in engagement with the respective first surface structure (118) of the guide rail profile (110) the mounting rail (1) from sliding in a predetermined direction (x1), which is parallel to the longitudinal direction (x), and
the second surface structure (18) of the second longitudinal leg (17) of the other one of the wings (15) is formed such that it blocks, when in engagement with the respective first surface structure (118) of the guide rail profile (110) the mounting rail (1) from sliding in a predetermined direction (×1), which is antiparallel to the longitudinal direction (x).

11. The mounting rail according to the preceding claim, wherein the longitudinal direction (x) points either in a vertical direction or in a horizontal direction.

12. The mounting rail (1) according to one of the preceding claims, further comprising a DIN rail (10) which is adapted to receive an installation device.

13. The mounting rail according to one of the preceding claims, wherein the guide rail system is part of a busbar adapter part (100).

14. Busbar adapter part (100) for a busbar adapter, the busbar adapter being attachable to at least one current busbar (20),
the busbar adapter part (100) comprising two parallel guide rail profiles (110) running in longitudinal direction (x) of the busbar adapter part (100) and being spaced apart from each other by a predetermined guide rail distance (d1),
each guide rail profile (110) comprising, on a first lateral surface (140), a longitudinal recess (150), and
at least one of the guide rail profiles (110) being provided, on a second lateral surface (160), with a first surface structure (118),
the busbar adapter part (100) being adapted for attaching a mounting rail (1) according to one of the preceding claims,
the first surface structure (118) being formed such that it blocks, when in engagement with the respective second surface structure (18), the mounting rail (1) from in at least one predetermined direction (x1),
the at least one predetermined direction (x1, x2) being parallel or antiparallel to the longitudinal direction (x).

15. The busbar adapter part (100) according to the preceding claim, wherein the first surface structure (118) comprises grooves extending perpendicularly with respect to the recess (150) and being regularly-spaced apart from each other, the grooves being further adapted to engage with corresponding ribs of the second surface structure (18).

16. The busbar adapter part (100) according to the preceding claim, wherein the grooves form a saw tooth profile, each tooth defining a rising edge along the longitudinal direction (x), and a return edge in the horizontal direction (y), with the rising edge of each tooth pointing up into the vertical direction (x).

17. The busbar adapter part (100) according to one of claims 15 to 16, wherein the grooves at predetermined positions are shaped differently from the grooves of other positions.

18. The busbar adapter part (100) according to one of claims 14 to 17, wherein the first surface structure (118) comprises ribs extending perpendicularly with respect to the recess (150) and being regularly-spaced apart from each other, the ribs being further adapted to engage with corresponding grooves of the second surface structure (18).
